# EUROPÄISCHE PATENTANMELDUNG

(11) **EP 1 057 398 A1**
(43) Veröffentlichungstag der Anmeldung: **06.12.2000**
(21) Anmeldenummer: 00250167.4
(22) Anmeldetag: 30.05.2000
(51) Int. Cl.: A01D 34/86

(54) **Trägerfahrzeug mit angebautem Arbeitsgerät, insbesondere Mähgerät**

(30) Priorität: 31.05.1999 DE 29909876 U; 31.05.1999 DE 29909878 U
(71) Anmelder: Gödde Maschinenbau GmbH, 49809 Lingen (Ems)-Laxten (DE)
(72) Erfinder: Gödde, Bernhard, 49809 lingen (Ems)-Laxten (DE); Gödde, Herrmann, Josef, 49808 Lingen(Ems)-Laxten (DE)
(74) Vertreter: Lüke, Dierck-Wilm

(57) **Zusammenfassung**

Die Erfindung bezieht sich auf ein Trägerfahrzeug mit angebautem Arbeitsgerät, insbesondere Mähgerät, das am freien Ende eines Auslegers angeordnet ist, der auf einer fahrzeugfesten Konsole an einem Drehkranz mit Kragarm dreh- und schwenkbar gelagert ist. Zur Verbesserung der Handhabbarkeit sieht die Erfindung vor, daß am Trägerfahrzeug ein zweiter Ausleger (28) dreh- und schwenkbar angelenkt ist, der am freien Ende ein zweites Arbeitsgerät, insbesondere Mähgerät (33), trägt.

## Beschreibung

Die Erfindung bezieht sich auf ein Trägerfahrzeug mit angebautem Arbeitsgerät, insbesondere Mähgerät, gemäß dem Oberbegriff des Patentanspruches 1.

Ein Trägerfahrzeug mit angebautem Arbeitsgerät, insbesondere Mähgerät, der gattungsgemäßen Art ist aus dem Prospekt AUSLEGERMÄHGERÄTE der Patentinhaberin vorbekannt. Hierbei trägt die fahrzeugfeste Konsole auf der Oberseite einen Drehkranz mit einem Kragarm, an dessen oberen Ende ein erster, zwei Arme unfassender Ausleger angelenkt ist, der über eine am Kragarm und in der Mitte des ersten Armes angelenkte Zylinderkolbeneinheit schwenkbar ist. Am freien Ende des ersten Armes ist ein zweiter Arm schwenkbar angelenkt und über eine zweite, am ersten und am zweiten Arm angreifende Zylinderkolbeneinheit bewegbar. Am freien Ende des zweiten Armes ist ein über eine dritte Zylinderkolbeneinheit betätigbarer Schwenkkopf angelenkt, der das Auslegermähgerät trägt. Das Trägerfahrzeug mit angebautem Auslegermähgerät dient insbesondere zum Mähen des Bewuchses von Böschungen, wobei das Auslegermähgerät mittels der Arme des Auslegers in die Neigung der Böschung gegenüber der Horizontallage der vom Trägerfahrzeug befahrenen Fahrbahn bringbar ist. Für die Fahrt zum Einsatzort kann das Arbeitsgerät mittels des Auslegers und des Drehkranzes mit Kragarm in eine Position quer zur Längsachse des Trägerfahrzeuges verbracht werden, wobei der Ausleger oberhalb der Konsole vertikal nach oben ragt.

Nachteilig bei dem vorbekannten Trägerfahrzeug mit angebautem Arbeitsgerät, insbesondere Auslegermähgerät, ist, daß der an die Böschung anschließende Randbereich der im wesentlichen horizontalen Fahrbahn für das Trägerfahrzeug und der unmittelbar anschließende, geneigte Böschungsbereich bei einer Arbeitsfahrt des Trägerfahrzeuges vom angebauten Auslegermähgerät nicht gleichzeitig mitbearbeitet werden kann, so daß ein zweiter Arbeitsdurchgang mit im wesentlichen horizontal arbeitendem Auslegermähgerät erforderlich ist.

Das Anbaugerät, insbesondere Anbaumähgerät, ist am freien Ende des Auslegers des Trägerfahrzeuges angeordnet, das regelmäßig auf einer horizontalen Fahrbahn entlang einer Böschung fährt, wobei das Anbaumähgerät in paralleler Lage zur Neigung der Böschung geführt wird. Um die Lage des Anbaumähgerätes senkrecht zur Fahrtrichtung des Trägerfahrzeuges einzustellen, wird der Ausleger bei im Stand der Technik vorbekannten Mähgeräten durch hierzu vorgesehene, besondere Zylinderkolbeneinheiten verstellt. Nachteilig ist, daß eine Verstellung des Auslegers erforderlich ist, damit das Anbaumähgerät beim Mähen an der Böschung Hindernissen ausweichen kann.
· Der Erfindung liegt die Aufgabe zugrunde, das Trägerfahrzeug mit angebautem Arbeitsgerät, insbesondere Auslegermähgerät, der gattungsgemäßen Art zu verbessern.

Zur Lösung dieser Aufgabe sieht die Erindung vor, daß am Trägerfahrzeug ein zweiter Ausleger dreh- und schwenkbar gelagert ist, der am freien Ende ein zweites Arbeitsgerät, insbesondere Mähgerät, trägt. Erfindungsgemäß kann das zweite Arbeitsgerät in ähnlicher Weise wie das erste Arbeitsgerät bei der Anfahrt des Trägerfahrzeuges zur Einsatzstelle quer zur Längsachse des Trägerfahrzeuges und horizontal zur Fahrbahn eingeschwenkt werden und beim Einsatz an der Arbeitsstelle wie das erste Arbeitsgerät ausgeschwenkt werden und gleichzeitig mit diesem den Randbereich der Fahrbahn neben der Böschung und/oder den an die Fahrbahn angrenzenden oberen Böschungsbereich bearbeiten. Hierdurch wird ein größerer Arbeitsbereich bearbeitet. Eine zweite Durchfahrt des Trägerfahrzeuges entlang der Einsatzstelle ist nicht mehr erforderlich. Es ergibt sich somit eine erhebliche Ersparnis durch Einsparung von Arbeitszeit des Träger fahrzeuges einschließlich der Bedienungsperson. In vorteilhafter Weiterbildung der Erfindung ist der zweite Ausleger unterhalb der fahrzeugfesten Konsole an einem zweiten Drehkranz gelagert. Hierdurch wird eine erhebliche Raumersparnis am Trägerfahrzeug, insbesondere Mähgerät erzielt.

In weiterer Ausbildung der Erfindung ist der zweite Ausleger einstückig ausgebildet und weist im Längsmittelbereich Schwenkzapfen für je eine Zylinderkolbeneinheit auf, die der Verschwenkung des zweiten Auslegers bzw. des zweiten Arbeitsgerätes, insbesondere Mähgerät, dienen. Im Gegensatz zum zweiarmigen ersten Ausleger für das erste Arbeitsgerät ist der zweite Ausleger für das zweite Arbeitsgerät somit nur einteilig und kann nach den Verschwenken des zweiten Arbeitsgerätes aus der Arbeitsposition um 180° eingeschwenkt werden und befindet sich dann im wesentlichen vor der Vorderseite oder hinter der Rückseite des Trägerfahrzeuges.

Um auch die Verstellung des Anbaugerätes, insbesondere Anbaumähgerätes, senkrecht zur Längsachse des Trägerfahrzeuges zu vereinfachen, ist in weiterer erfinderischer Ausgestaltung am Schwenkkopf eine Einrichtung zur Querverschiebung des Anbaugerätes, insbesondere des Anbaumähgerätes, angeordnet. Hierdurch kann eine Verstellung des Anbaugerätes, insbesondere Anbaumähgerätes, in zur Längsachse, d.h. Fahrtrichtung des Trägerfahrzeuges, senkrechter Richtung erfolgen, ohne daß eine Veränderung der Lage des Auslegers erforderlich ist, so daß Hindernissen an der Böschung ausgewichen werden kann, ohne die Stellung der Arme des Auslegers zu verändern. Dieser Vorteil des Querverschubes des Arbeitswerkzeuges am Auslegerarm bedeutet eine wesentliche Vereinfachung und Zeitersparnis in der Bedienung, da der Fahrzeugführer nur eine Funktion ausführen bzw. steuern muß. Dabei erfolgt eine Verschiebung nur am freien Ende des Auslegers, dessen Stellung unverändert bleibt. Weiterhin ist diese Einrichtung aus einer am Schwenkkopf angeordneten Führungsbuchse und einer am Anbaugerät angeordneten, von der Führungsbuchse geführten Führungsstange und einem Antrieb ausgebildet. Führungsbuchse und Führungsstange können auch jeweils in paralleler Anordnung zweifach vorgesehen sein, um eine Lagestabilisierung des Anbaugerätes am Schwenkkopf zu ermöglichen. Als Antrieb sind eine Zylinderkolbeneinheit oder ein Kettenantrieb vorgesehen.

Das neuerungsgemäße Trägerfahrzeug mit angebautem Arbeitsgerät, insbesondere Mähgerät, ist nachfolgend anhand einer in den Zeichnungen dargestellten Ausführungsform näher erläutert. Es zeigen:
- Fig.1: eine Stirnansicht des Trägerfahrzeuges mit ausge schwenktem ersten Ausleger und eingeschwenktem zweiten Ausleger und daran angebrachten Arbeitsgeräten,
- Fig.2: eine Stirnansicht des Trägerfahrzeuges mit zusätzlich ausgegeschwenktem zweiten Ausleger mit daran angebrachtem zweiten Arbeitsgerät,
- Fig.3: ein Detail der Zylinderkolbeneinheit,
- Fig.4: einen Schnitt gemäß der Linie IV-IV in Fig.3 und
- Fig.5: ein Detail des Kettenantriebes.

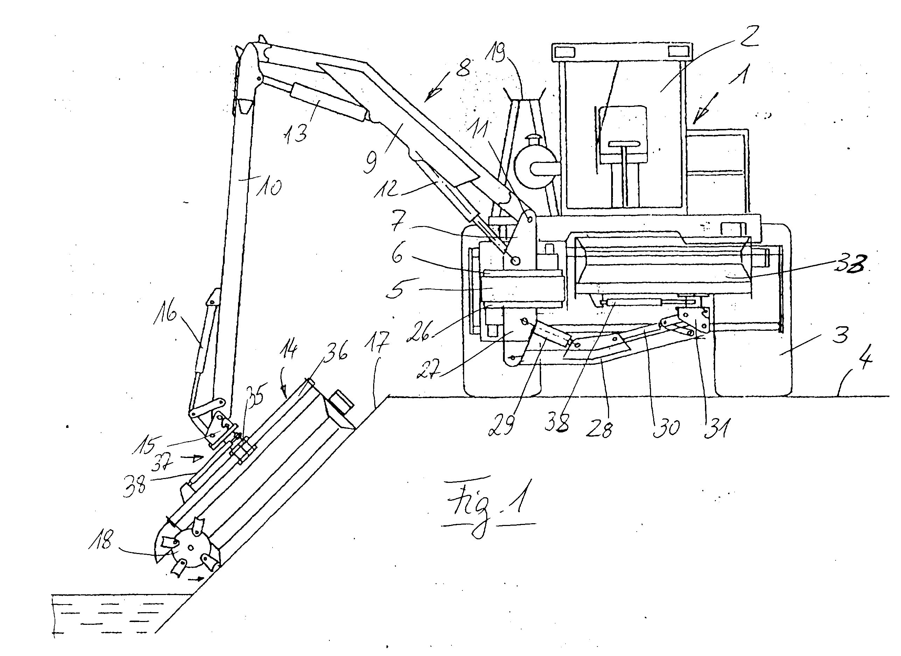

Das Trägerfahrzeug 1 ist ein motorisch angetriebenes Arbeitsfahrzeug mit Führerhaus 2 und auf der horizontal verlaufenden Fahrbahn 4 laufenden Rädern 3 sowie einer an den Rahmen des Träger fahrzeuges 1 auf der Vorderseite fahrzeugfest angebauten horizontalen Konsole 5. Diese trägt auf der Oberseite einen motorisch antreibbaren ersten Drehkranz 6 mit einem darauf festangebrachten, ersten vertikalen Kragarm 7. An dessen Oberseite ist an einem Schwenkzapfen 11 ein zweiteiliger, erster Ausleger 8 gelagert, dessen Arme 9,10 über angelenkte Zylinderkolbeneinheiten 12, 13 schwenkbar sind. Am freien Ende des freien Armes 10 des ersten Auslegers 8 ist ein erstes Mähgerät 14 an einem Schwenkkopf 15 angebracht, der über eine Zylinderkolbeneinheit 16 betätigbar ist. Das Mähgerät 14 kann, wie es in Fig.1 und 2 dargestellt ist, somit auf die Neigung der Böschung 17 eingestellt werden, um dort Mäharbeiten durchzuführen. Das Mähgerät 14 ist ein Schlegelmäher mit Schleuderrad 18 als Seitenhäxler.

Unterhalb der fahrzeugfesten Konsole 5 ist ein zweiter Drehkranz 26 mit einem vertikal nach unten gerichteten zweiten Kragarm 27 angeordnet, der einen zweiten, einteiligen Ausleger 28 trägt, der über zwei Zylinderkolbeneinheiten 29, 30 betätigbar ist. Am freien Ende des einteiligen zweiten Auslegers 28 ist ein zweiter Schwenkkopf 31 schwenkbar angelenkt, der über eine Zylinderkolbeneinheit 32 schwenkbar ist. Der zweite Schwenkkopf 31 trägt ein zweites Mähgerät 33, das im wesentlichen zum Mähen der horizontalen Fahrbahnbereiche am Rande der Böschung 17 aber auch zum Mähen des Randbereiches der Böschung 17 selbst unabhängig vom ersten Mähgerät 14 verwendbar ist.

Die in den Figuren jeweils dargestellten Schwenkzapfen für die diversen Zylinderkolbeneinheiten 12,13,16,29, 30 und 32 sind mit Ausnahme der beiden Schwenkzapfen 11 und 34 nicht näher bezeichnet, für den Fachmann jedoch selbstverständlich. Nicht näher dargestellt ist ferner der Antrieb für die beiden Drehkränze 6,26, die unabhängig voneinander vom Führerhaus 2 aus betätigbar sind. Auch sind die Zylinderkolbeneinheiten 12,13,16, 29,30 und 32 unabhängig voneinander aus dem Führerhaus 2 heraus betätigbar.

Beide Mähgeräte 14,33 sind am freien Ende der Ausleger 8 bzw. 28 an den jeweiligen Schwenkköpfen 15,31 querverschiebbar gelagert. Hierzu weist jeder Schwenkkopf 15,31 eine im Querschnitt rechteckige Führungsbuchse 35 für eine querverschiebbare, das Mähgerät 14,33 tragende, im Querschnitt ebenfalls rechteckige Führungsstange 36 und einen Antrieb 37 auf. Dieser besteht in der dargestellten Ausführungsform jeweils aus einer Zylinderkolbeneinheit 38, kann jedoch auch durch einen Kettenantrieb ausgeführt sein. Durch die Querverschiebbarkeit der Mähgeräte 14,33 ist ein universeller Einsatz im jeweiligen Arbeitsbereich möglich. Es können auch zwei parallele kreisrunde Führungsstangen mit im Querschnitt kreisrunden Führungsbuchsen verwendet werden.

Die Fig. 1 zeigt das erste Mähgerät 14 in Arbeitsstellung an der Böschung 16 und das zweite Mähgerät 33 in eingeschwenkter Stellung auf der Vorderseite des Trägerfahrzeuges 1 in einer quer zu dessen Längsachse erstreckender Horizontallage und den unterhalb des zweiten Mähgerätes 33 eingeschwenktem zweiten Ausleger 28. Dieser wird zusammen mit dem zweiten Mähgerät 33 mittels des zweiten Drehkranzes 26 um 180° zur Böschung 16 hin verschwenkt, woraufhin das zweite Mähgerät 33 um 180° in seine Arbeitsposition parallel zur Fahrbahn 4 verschwenkbar ist. Das erste Mähgerät 14 wird auf die in der Zeichnung linke Seite des Träger fahrzeuges 1 geschwenkt, wobei der eingeknickte Ausleger 8 auf einer Konsole 19 neben dem Führerhaus 2 aufliegt. Die Anordnung zweier Mähgeräte 14, 34 an einer Konsole 5 kann auch sowohl auf der Vorder- als auch auf der Rückseite des Trägerfahrzeuges 1 erfolgen. Arbeitswerkzeuge sind Mulch- oder Schlegelkopf, Schneidwerke, Kreiselmäher, Lichtraumprofilscherern oder Sägen.

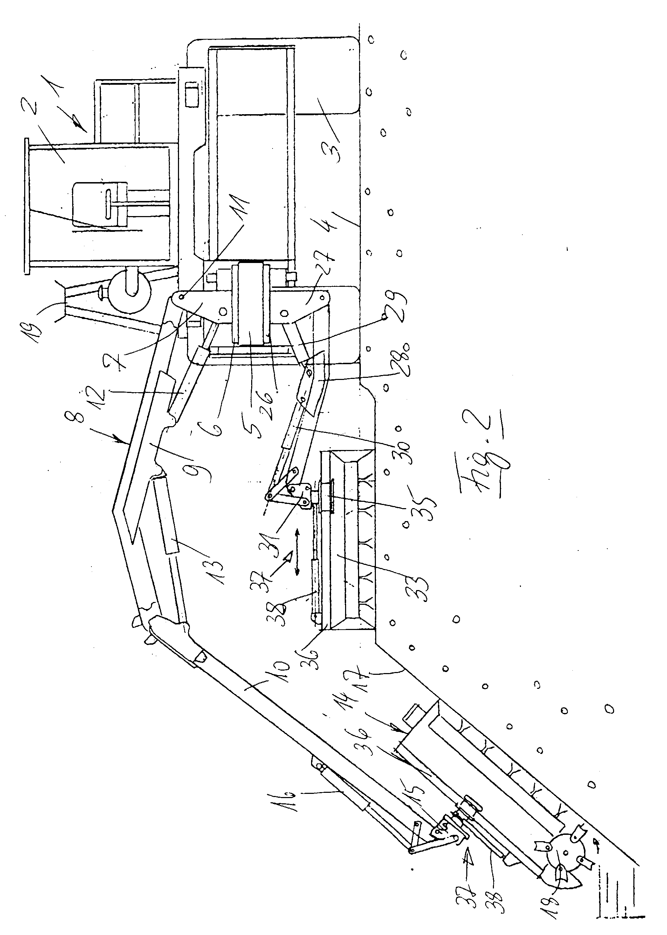

Die Fig. 3 und 4 zeigen den Zylinderkolbenantrieb des mit einer Tragplatte 39 zum Anschluß an den Ausleger 8 bzw. 28 versehenen Mähgerätes 14 bzw. 33. Die Tragplatte 39 trägt die mit einer im Querschnitt rechteckigen, durch eine Dekkelplatte 43 verschlossenen Öffnung (Fig. 4) versehene Führungsbuchse (Schiebekonsole) 35, in der die im Querschnitt entsprechend rechteckig ausgebildete Führungsstange 36 geführt ist. Die Zylinderkolbeneinheit 38 und die zugehörige Kolbenstange 40 liegen parallel zur Führungsstange 36 und sind mit der Schiebekonsole 35 und der Führungsstange 36 über Anlenkelemente 41,42 verbunden. Eine Betätigung der Zylinderkolbeneinheit 38 bewirkt eine Verstellung des Mähgerätes 14, 33 gegenüber der Tragplatte 39, so daß eine Verstellung des Auslegers 8 bzw. 28 nicht erforderlich ist.

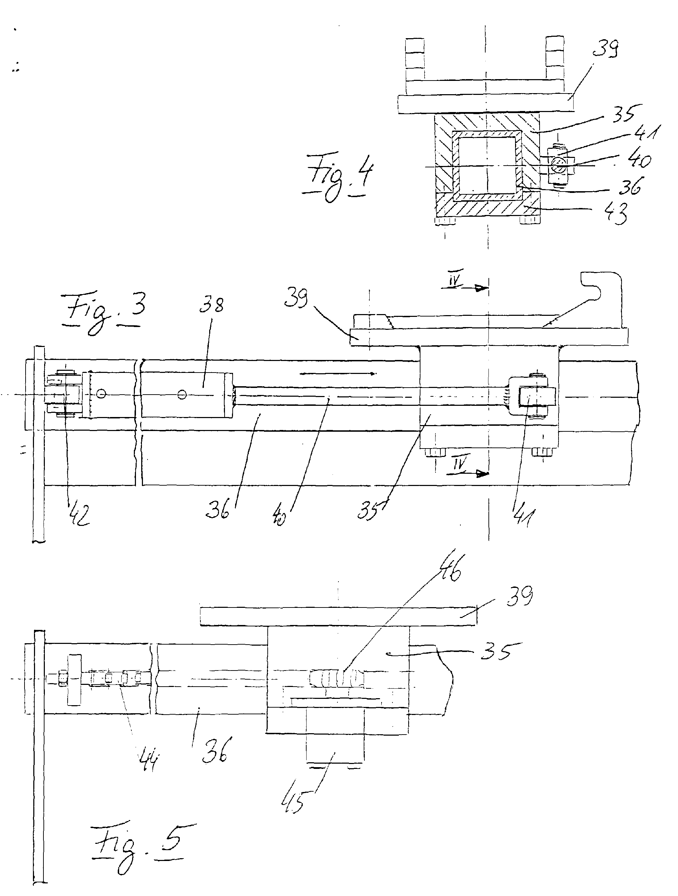

Die Fig. 5 zeigt alternativ den Kettenantrieb des Mähgerätes 14 bzw. 33, wobei eine Kette 44 mit Spannschraube über einen Ölmotor 45 und ein Kettenrad 46 angetrieben wird, um die Führungsstange 36 innerhalb der Schiebekonsole 35 und damit das Mähgerät 14 bzw. 33 zu verschieben.

### BEZUGSZEICHENLISTE

- 1: Trägerfahrzeug
- 2: Führerhaus
- 3: Rad
- 4: Fahrbahn
- 5: Konsole
- 6: Drehkranz
- 7: Kragarm
- 8: Ausleger
- 9, 10: Arm
- 11: Schwenkzapfen
- 12, 13: Zylinderkolbeneinheit
- 14: Mähgerät
- 15: Schwenkkopf
- 16: Zylinderkolbeneinheit
- 17: Böschung
- 18: Schleuderrad
- 19: Konsole
- 26: Drehkranz
- 27: Kragarm
- 28: Ausleger
- 29,30: Zylinderkolbeneinheit
- 31: Schwenkkopf
- 32: Zylinderkolbeneinheit
- 33: Mähgerät
- 35: Führungsbuchse / Schiebekonsole

- 36: Führungsstange
- 37: Antrieb
- 38: Zylinderkolbeneinheit
- 39: Tragplatte
- 40, 42: Anlenkelement
- 43: Deckelplatte
- 44: Kette
- 45: Ölmotor

## Patentansprüche

1. Trägerfahrzeug mit angebautem Arbeitsgerät, insbesondere Mähgerät, das am freien Ende eines Auslegers angeordnet ist, der auf einer fahrzeugfesten Konsole an einem Drehkranz mit Kragarm dreh- und schwenkbar gelagert ist,
**dadurch gekennzeichnet,**
daß am Trägerfahrzeug ein zweiter Ausleger (28) dreh- und schwenkbar angelenkt ist, der am freien Ende ein zweites Arbeitsgerät, insbesondere Mähgerät (33), trägt.

2. Trägerfahrzeug nach Anspruch 1, dadurch gekennzeichnet, daß der zweite Ausleger (28) unterhalb der fahrzeugfesten Konsole (5) an einem zweiten Drehkranz (26) mit Kragarm (27) gelagert ist.

3. Trägerfahrzeug nach Anspruch 1 oder 2, dadurch gekennzeichnet, daß der zweite Ausleger (28) einteilig ausgebildet ist und im Längsmittelbereich Schwenkzapfen für je eine Zylinderkolbeneinheit (29,30) aufweist, die der Verschwenkung des zweiten Auslegers (28) bzw. des zweiten Arbeitsgerätes (33) dienen.

4. Trägerfahrzeug nach einem der Ansprüche 1 bis 3, dadurch gekennzeichnet, daß das Arbeitsgerät (14,33) am freien Ende des Kragarmes (8,28) an einem Schwenkkopf (15,31) querverschiebbar gelagert ist.

5. Trägerfahrzeug nach Anspruch 4, dadurch gekennzeichnet, daß der Schwenkkopf (15,31) eine Führungsbuchse (35) für eine querverschiebbare, das Arbeitsgerät (15,33) tragende Führungsstange (36) und einen Antrieb (37) für die Führungsstange (36) aufweist.

6. Trägerfahrzeug nach Anspruch 5, dadurch gekennzeichnet, daß die Führungsbuchse (35 ) und die Führungsstange (36) im Querschnitt rechteckig ausgebildet sind.

7. Trägerfahrzeug nach Anspruch 5, dadurch gekennzeichnet, daß die Führungsbuchse (35 ) und die Führungsstange (36) in paralleler Anordnung vorgesehen sind.

8. Trägerfahrzeug nach Anspruch 5, dadurch gekennzeichnet, daß der Antrieb (37) aus einer Zylinderkolbeneinheit (38) gebildet ist.

9. Trägerfahrzeug nach Anspruch 5, dadurch gekennzeichnet, das der Antrieb als Kettenantrieb ausgebildet ist.
